# FASCICULE DE BREVET EUROPEEN

(11) **EP 0 663 226 B1**
(45) Date de publication et mention de la délivrance du brevet: **21.04.1999**
(21) Numéro de dépôt: 95460002.9
(22) Date de dépôt: 16.01.1995
(51) Int. Cl.: B01D 27/08, F01M 1/10

(54) **Filtre et cartouche de filtrage à noyau central désolidarisé, pour le filtrage de liquides moteur**
Filter und Filterkartusche mit freiem Zentralkern für die Filtration von Motorflüssigkeiten
Filter and filter cartridge with free central core for filtering motor liquids

(30) Priorité: 17.01.1994 FR 9400614
(43) Date de publication de la demande: 19.07.1995
(73) Titulaire: Fleetguard International Corporation (Corporation américaine), Columbus, Indiana (US)
(72) Inventeur: Guichaoua, Jean-Luc, F-29120 Combrit (FR); Douchet, Denis, F-29000 Quimper (FR)
(74) Mandataire: Vidon, Patrice

(56) Documents cités:
- EP-A- 0 580 491
- DD-A- 226 139
- FR-A- 1 096 636
- FR-A- 1 152 267
- FR-A- 2 214 505

## Description

Le domaine de l'invention est celui du filtrage d'un liquide, notamment l'huile, le carburant ou le liquide de refroidissement, circulant dans un moteur, en particulier dans un moteur thermique, ou dans un équipement hydraulique.

Plus précisément, l'invention concerne un filtre du type comprenant une cuve se rapportant sur un organe de réception solidaire du bloc-moteur, et une cartouche de filtrage amovible destinée à être insérée dans cette cuve, et à être remplacée après un certain temps d'usage.

Par bloc-moteur, on entend également, et de façon plus générale, tout type d'équipement hydraulique. Par ailleurs, par la suite, l'organe de réception solidaire du bloc-moteur est indifféremment désigné sous les termes de "tête de filtre" ou plus simplement "tête".

De façon classique, la cartouche est calée ou limitée en déplacement longitudinal à l'intérieur de la cuve par double contact, à une extrémité haute avec la tête de filtre et à une extrémité basse avec le fond de la cuve.

Le fonctionnement de ce genre de filtre est le suivant : le liquide à filtrer (par exemple de l'huile) est introduit par un orifice d'admission de la tête, arrive dans une cavité latérale de la cuve, s'écoule le long de la paroi interne de la cuve, passe à travers un élément filtrant de la cartouche qui retient les particules (notamment les particules de métaux lourds) se trouvant en suspension dans le liquide, puis le liquide ainsi filtré passe à travers une cavité centrale de la cuve, et sort par un orifice d'évacuation de la tête.

Lorsque la cartouche placée dans la cuve est usagée, c'est-à-dire lorsque l'élément filtrant ne remplit plus son rôle de filtration de façon satisfaisante, on sépare la cuve de la tête de filtre, on ôte la cartouche usagée de la cuve, on la remplace par une nouvelle cartouche et on replace la cuve contre la tête de filtre.

Par la suite, les cartouches usagées sont incinérées de façon à détruire les matières polluantes organiques et concentrer les matières polluantes inorganiques (notamment les métaux lourds, tels que le plomb).

Ce genre de filtre présente toutefois plusieurs inconvénients.

Un premier inconvénient réside dans le fait que les cartouches usagées ne sont pas totalement incinérables du fait qu'elles comprennent généralement certains éléments métalliques, notamment des flasques d'extrémité et un tube intérieur central. L'élimination des déchets en est rendue plus compliquée, au détriment de l'environnement.

Un autre inconvénient est lié au calage longitudinal de la cartouche à l'intérieur de la cuve. En effet, ce calage nécessite une prise en compte précise du positionnement relatif de la cuve par rapport à la tête de filtre puisque la cuve sert de butée. En d'autres termes, le jeu longitudinal (réel ou potentiel s'il s'agit d'un montage à force) de la cartouche dans la cuve dépend du dimensionnement de la cuve.

On connait par FR-A-1 096 636 un filtre utilisant une cartouche constituée d'une matière filtrante contenue entre deux fourreaux concentriques perforés et deux embases. Cette cartouche est insérée dans une cuve autour d'un noyau central indépendant, s'étendant longitudinalement à l'intérieur de la cuve sur toute sa longueur et fixé de façon amovible. La cartouche est tenue en place par deux butées en contact, respectivement, avec la cuve par l'intermédiaire d'un ressort et avec la tête de filtre. Une des embases est amovible pour permettre le remplacement de la matière filtrante usagée.

La conformation de tous ces types de filtres est telle qu'ils présentent un certain nombre de zones de fuite de liquides. Ils nécessitent donc l'utilisation de plusieurs joints d'étanchéité.

On connaît également, à travers le document de brevet EP-A-0 580 491 (LABINAL) publié le 26.01.94 constitue un état de la technique au sans de l'Art. 54(3) CBE. Ce document décrit un filtre comprenant:
- une cartouche filtrante, comportant elle-même un élément filtrant, dépourvu de tube rigide perforé central, et deux rondelles (ou flasques);
- un boîtier de réception de la cartouche filtrante, comprenant une cuve cylindrique et un couvercle ;
- un tube rigide perforé, monté axialement sur le couvercle, et qui présente à ses deux extrémités des butées, ou portées annulaires (à savoir une collerette et la tranche terminale du tube) contre lesquelles viennent s'appliquer automatiquement les deux flasques de la cartouche, au moins lors de la mise en place sur la cuve du couvercle équipé de la cartouche.

Il est à noter que les deux butées, qui sont liées au tube, sont prévues pour réaliser, sous la détente d'un ressort, un ajustement serré axial de la cartouche entre la collerette du tube et l'épaulement annulaire du fond du boîtier. Il s'agit donc, dans ce document, d'assurer l'étanchéité (cf col.4 1.34-37), et non pas de limiter le déplacement longitudinal de la cartouche.

L'invention a notamment pour objectif de proposer une alternative aux filtres connus.

Plus précisément, un objectif de l'invention est de fournir un filtre pour liquide circulant dans un bloc-moteur, du type constitué d'une cartouche de filtrage insérée dans une cuve qui est destinée à être rapportée sur un organe de réception solidaire du bloc-moteur, cette cartouche étant facilement remplaçable et complètement incinérable lorsqu'elle est usagée, c'est-à-dire lorsque l'élément filtrant ne remplit plus son rôle de filtration de façon satisfaisante.

Un autre objectif de l'invention est de fournir un tel filtre dont le montage est indépendant du dimensionnement de la cuve ainsi que du positionnement relatif cuve/organe solidaire du bloc-moteur.

Un objectif complémentaire de l'invention est de fournir un tel filtre permettant de limiter le nombre de composants nécessaires (et notamment le nombre de joints d'étanchéité).

Un autre objectif de l'invention est de fournir un tel filtre dont la cartouche présente une masse réduite.

Ces objectifs, ainsi que d'autres qui apparaîtront par la suite, sont atteints selon l'invention à l'aide d'un filtre selon la revendication 1.

Ainsi, le noyau central est désolidarisé d'avec la cartouche de filtrage, ainsi que de la cuve et de la tête de filtre. En d'autres termes, le noyau central est démontable et autonome. Ceci permet de réduire le coût de revient du filtre puisque d'une part le noyau central amovible est réutilisable et d'autre part la cartouche est moins complexe.

De plus, la quantité de matériau non incinérable comprise dans la cartouche est réduite puisque le noyau central ne fait plus partie de cette cartouche. Ceci permet de réaliser le noyau en matériau non incinérable sans inconvénient, le noyau n'ayant plus à être incinéré avec la cartouche.

On aura noté que comme, selon l'invention, une paroi du noyau central amovible permet de limiter un éventuel déplacement longitudinal de la cartouche, le calage de la cartouche dans la cuve se fait indépendamment du dimensionnement de la cuve. On n'est plus tributaire du positionnement relatif cuve/tête de filtre puisque, dorénavant, une des deux butées limitant le déplacement longitudinal de la cartouche dans la cuve est liée au noyau central amovible.

Il est également à noter que du fait qu'il s'étend longitudinalement à l'intérieur de la cuve, le noyau central permet le maintien en pression de la cartouche. En d'autres termes, le noyau central permet d'éviter que l'élément filtrant se comprime au centre sous la pression du liquide à filtrer.

Dans un premier mode de réalisation préférentiel de l'invention, ledit noyau central amovible comprend d'une part une extrémité support qui est ajustée sur un plot formé dans le fond de la cuve, et d'autre part une extrémité libre qui débouche dans la cavité centrale de ladite cartouche.

Dans un second mode de réalisation préférentiel de l'invention, ledit noyau central amovible comprend d'une part une extrémité support qui est ajustée sur un plot formé dans l'organe de réception solidaire du bloc-moteur, et d'autre part une extrémité libre qui débouche dans la cavité centrale de ladite cartouche.

Dans les différents modes de réalisation, ladite cartouche est avantageusement du type constituée d'un élément filtrant, généralement de forme annulaire cylindrique, et limité transversalement à ses extrémités par un flasque de tête et de cuve.

Avantageusement, dans le cas du premier mode de réalisation préférentiel de l'invention, ledit flasque de tête est limité en déplacement longitudinal entre d'une part l'organe de réception solidaire du bloc-moteur, par une première de ses faces, et d'autre part l'extrémité supérieure du noyau central amovible, par sa face opposée.

Dans une variante, ledit noyau central amovible présente un épaulement essentiellement perpendiculaire à l'axe longitudinal dudit noyau central amovible,
et d'une part ledit flasque de tête est limité en déplacement longitudinal par l'organe de réception solidaire du bloc-moteur, et d'autre part ledit flasque de cuve est limité en déplacement longitudinal par ledit épaulement du noyau central amovible.

Avantageusement, dans le cas du second mode de réalisation préférentiel de l'invention, ledit flasque de cuve est limité en déplacement longitudinal entre d'une part le fond de la cuve, par une première de ses faces, et d'autre part l'extrémité supérieure du noyau central amovible, par une seconde de ses faces.

Dans une variante, ledit noyau central amovible présente un épaulement essentiellement perpendiculaire à l'axe longitudinal dudit noyau central amovible,
et d'une part ledit flasque de cuve est limité en déplacement longitudinal par le fond de la cuve, et d'autre part ledit flasque de tête est limité en déplacement longitudinal par ledit épaulement du noyau central amovible.

Avantageusement, ladite cartouche est montée avec un ajustement serré radial aux environs d'au moins une de ses extrémités. Les flasques sont alors avantageusement en matériau macromoléculaire souple (par exemple en polyuréthane), et forment joint d'étanchéité. On peut toutefois aussi prévoir de mettre des joints spécifiques à ce niveau.

Le fait de réaliser un tel ajustement serré radial assure l'étanchéité des liaisons, et dispense de prévoir une étanchéité aux extrémités frontales supérieure et inférieure de la cartouche. Ainsi, on peut monter la cartouche dans ladite cuve avec un jeu longitudinal potentiel, c'est-à-dire que la cartouche peut présenter une cote hors-tout entre les flasques notablement inférieure à la distance séparant les épaulements entre lesquels elle peut venir en butée, haute et basse.

Toutefois, dans un autre mode de réalisation, ladite cartouche peut parfaitement être montée dans ladite cuve en ajustement jointif et serré entre les deux butées d'extrémités, et donc sans jeu longitudinal potentiel.

Selon une variante encore différente, on peut enfin envisager de monter la cartouche avec un ajustement serré axial aux environs d'une première de ses extrémités et avec un ajustement serré radial aux environs d'une seconde de ses extrémités.

Dans un autre mode de réalisation avantageux de l'invention, ledit plot constitue également ledit noyau central amovible. En d'autres termes, le plot et le noyau central amovible ne constituent qu'un seul et même élément.

Préférentiellement, ledit filtre comprend un joint annulaire d'étanchéité placé entre la base interne dudit noyau central amovible et ledit plot.

Ce joint annulaire permet d'assurer d'une part l'étanchéité entre le plot et le noyau central amovible, et d'autre part le centrage du noyau central amovible, par exemple par ajustement serré avec le plot.

Avantageusement, ledit noyau central amovible est un tube évidé et présente deux portions adjacentes possédant des diamètres internes distincts, à savoir :
- une portion inférieure possédant d'une part un premier diamètre interne légèrement supérieur au diamètre externe dudit plot et d'autre part un premier diamètre externe ; et
- une portion supérieure possédant d'une part un second diamètre interne substantiellement supérieur au diamètre externe dudit plot et d'autre part un second diamètre externe inférieur audit premier diamètre externe.

Ainsi, d'une part la portion inférieure du tube central est en contact avec le plot de support et de centrage, et, d'autre part, la portion supérieure du tube central est suffisamment éloignée du plot pour que le liquide filtré puisse circuler et être évacué par le haut.

Avantageusement, ledit noyau central amovible comporte au moins une ouverture, par exemple de forme oblongue, au niveau de ladite portion supérieure du noyau central amovible. Cette ou ces ouverture(-s) permet(-tent) l'évacuation du filtrat, et leur nombre, dimensionnement et forme sont notamment fonctions des débits attendus. Pour faciliter les opérations de mise en forme, elles peuvent être percées en une seule passe, par exemple au moyen d'un usinage par brochage ou par moulage avec tiroir unique.

De cette façon, la cartouche est entièrement incinérable, ce qui permet de réduire la pollution engendrée par les cartouches usagées.

Avantageusement, ladite cuve possède une face unique de transfert de liquide entre la cartouche et l'organe de réception solidaire du bloc-moteur.

Avantageusement, le filtre selon l'invention appartient au groupe comprenant : les filtres à huile, les filtres à carburant, les filtres à liquide de refroidissement, et les filtres à liquide hydraulique.

L'invention concerne également une cartouche de filtrage pouvant être mise en oeuvre dans un filtre possédant les caractéristiques ci-dessus.

D'autres caractéristiques et avantages de l'invention apparaîtront à la lecture de la description suivante de plusieurs modes de réalisation préférentiels de l'invention, donnés à titre d'exemple indicatif et non limitatif, et des dessins annexés, dans lesquels :
- la figure 1 présente une vue en coupe longitudinale d'un premier et d'un second modes de réalisation préférentiel d'un filtre à carburant selon l'invention;
- la figure 2 présente une vue en coupe longitudinale d'un premier et d'un second modes de réalisation préférentiels d'un filtre à huile selon l'invention ;
- la figure 3 présente une vue en coupe longitudinale partielle d'un exemple de mode de réalisation d'une cartouche de filtrage faisant partie d'un filtre tel que présenté sur les figures 1 et 2 ;
- la figure 4 présente une vue en coupe longitudinale de deux modes de réalisation d'un noyau central amovible faisant partie d'un filtre tel que présenté sur les figures 1 et 2 ; et
- la figure 5 présente une vue en coupe longitudinale d'un autre mode de réalisation préférentiel d'un filtre à huile selon l'invention.

L'invention concerne donc un filtre du type comprenant une cuve coopérant avec un noyau central et une cartouche de filtrage destinée à être insérée dans cette cuve, autour du noyau central. Après un certain temps d'utilisation, la cartouche usagée est remplacée par une nouvelle cartouche.

La cuve est destinée à être rapportée sur un organe de réception (ou tête) solidaire d'un bloc-moteur ou d'un équipement hydraulique. La suite de la description concerne tout d'abord un filtre à carburant puis un filtre à huile. Il est clair que l'invention n'est pas limitée au filtrage du carburant ou de l'huile mais concerne plus généralement le filtrage de tous types de liquides circulant dans un bloc-moteur ou dans un équipement hydraulique. L'homme du métier saura donc adapter les filtres à carburant et à huile présentés ci-dessous à un filtre permettant de filtrer n'importe quel type de liquide (tel qu'un liquide de refroidissement par exemple).

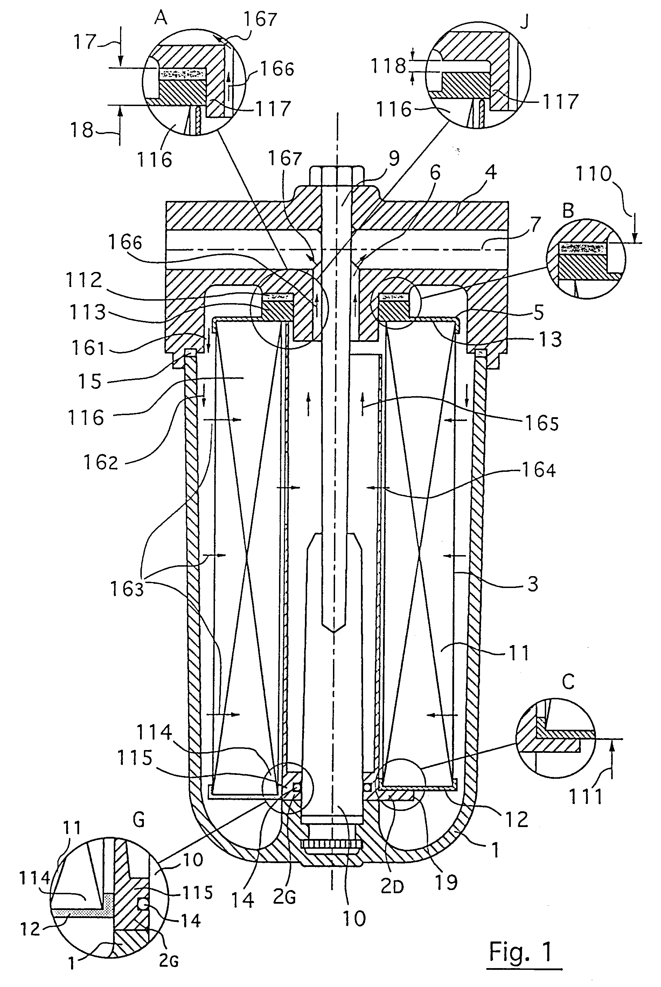

La figure 1 présente :
- sur sa moitié gauche, une vue en coupe longitudinale d'un premier mode de réalisation préférentiel d'un filtre à carburant selon l'invention, et
- sur sa moitié droite, une vue en coupe longitudinale d'un second mode de réalisation préférentiel d'un filtre à carburant selon l'invention.

Ce filtre comprend, dans ces deux premiers modes de réalisation, quatre éléments principaux, à savoir un organe de réception 4 solidaire d'une tête de filtre (représentée partiellement), une cuve 1, un noyau central amovible 2_{G} , 2_{D} indépendant amovible et une cartouche de filtrage 3.

Le principe de l'invention consiste à :
- d'une part, désolidariser le noyau central 2_{G} , 2_{D} d'avec la cartouche de filtrage 3. Ceci permet de réduire la quantité de matière non incinérable présente dans les cartouches ; et
- d'autre part, utiliser le noyau central amovible pour :
   * limiter le déplacement longitudinal de la cartouche dans la cuve. Ceci permet de rendre le calage de la cartouche dans la cuve indépendant du dimensionnement de la cuve et du positionnement relatif cuve/bloc-moteur ;
   * maintenir en pression la cartouche. En effet, sous la pression du liquide à filtrer, l'élément filtrant, s'il n'était pas maintenu, se comprimerait au centre ;
   * centrer radialement la cartouche (puisque celle-ci ne comporte pas de tube intérieur central).

La tête de filtre 4 comprend un orifice d'admission de liquide (non représenté) débouchant sur une cavité latérale 5 et un orifice d'évacuation de liquide communiquant avec une cavité centrale 6.

En d'autres termes, avec une cavité latérale d'admission et une cavité centrale d'évacuation situées dans un même plan, la tête de filtre 4 possède une face unique de transfert de liquide avec la cartouche 3 placée dans la cuve 1.

On place généralement un joint annulaire d'étanchéité 15 entre la tête de filtre 4 et la cuve 1.

Les moyens de fixation de la cuve 1 à la tête de filtre 4 comprennent d'une part une tige 9 traversant la tête de filtre 4 et d'autre part un plot 10 fixé au fond de la cuve 1. Dans l'exemple présenté sur la figure 1, la tige 9 est une vis et l'extrémité libre du plot 10 comporte un taraudage apte à recevoir cette vis 9.

Dans ces deux modes de réalisation (figure 1, partie gauche et partie droite), le noyau central amovible 2_{G} , 2_{D} est ajouré et comprend d'une part une extrémité libre qui débouche dans la cavité centrale de la cartouche précédant la cavité centrale 6 de la tête de filtre 4, et d'autre part une extrémité support qui est ajustée autour d'un plot formé dans le fond de la cuve 1.

Le plot 10 est ici le même que celui utilisé conjointement avec la tige 9 pour fixer la cuve 1 à la tête de filtre 4.

Un joint annulaire d'étanchéité 14 peut être placé entre la base interne du noyau central amovible 2_{G} , 2_{D} et le plot 10 fixé au fond de la cuve 1. Ce joint 14 permet d'éviter le passage de liquide et peut participer au serrage du noyau sur le plot.

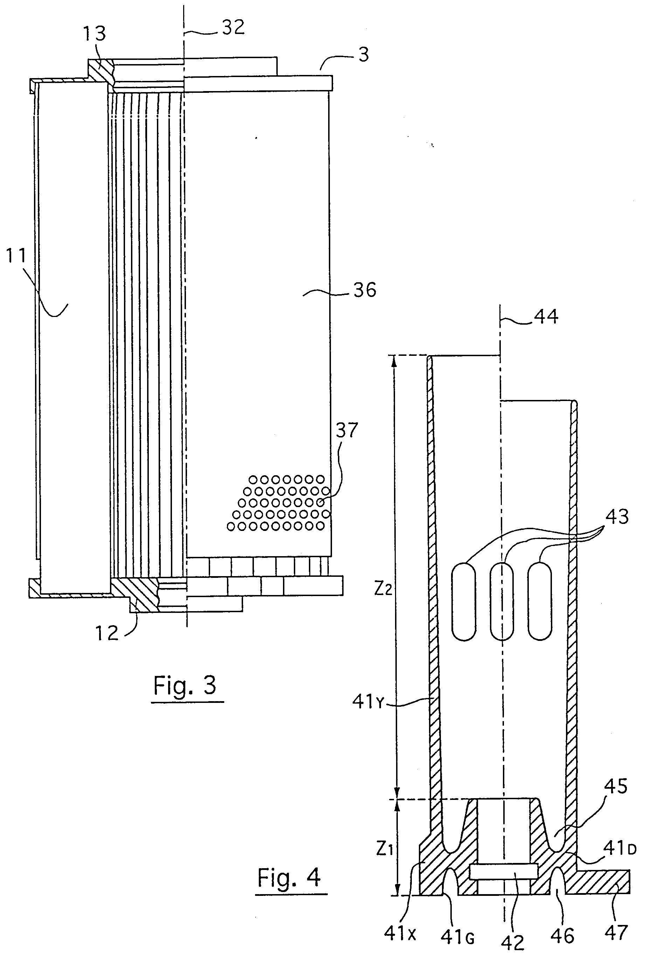

Ce noyau central amovible 2_{G} , 2_{D} est par exemple un tube évidé réalisé en matière plastique macromoléculaire, telle qu'un polyamide notamment. Un mode de réalisation d'un tel tube central est présenté par la suite en relation avec la figure 4.

La cartouche de filtrage 3 comprend :
- un élément filtrant 11, et
- deux flasques, à savoir un "flasque de tête" 13 (appelé ainsi parce qu'il est placé du côté de la tête du filtre 4), et un "flasque de cuve" 12 (appelé ainsi parce qu'il est du côté du fond de la cuve 1). En occurrence, le flasque de cuve 12 est inférieur, et le flasque de tête 13 est supérieur. Ces deux flasques sont collés aux extrémités de l'élément filtrant 11 et limitent transversalement celui-ci.

L'insertion de la cartouche 3 dans la cuve 1 consiste à placer l'élément filtrant 11 autour du tube central. La forme longitudinale du tube central lui permet d'assurer la fonction de maintien en pression de la cartouche.

Dans le premier mode réalisation (figure 1, partie gauche, médaillon A), le flasque supérieur 13 est limité en déplacement entre d'une part la tête de filtre 4, par sa face supérieure, et d'autre part l'extrémité supérieure du noyau central amovible 2_{G}, par sa face inférieure.

La cartouche peut être montée dans la cuve avec ou sans jeu longitudinal potentiel.

Ainsi, dans l'exemple présenté en détail dans le médaillon noté A, la cartouche est montée sans jeu longitudinal potentiel, grâce à une combinaison partie molle 112 / partie dure 113, la partie molle rattrapant le jeu éventuel. La cartouche est donc limitée en déplacement longitudinal à l'intérieur de la cuve 1 par deux forces 17, 18 de sens opposés s'exerçant sur le flasque supérieur 13.

Par contre, dans l'exemple présenté en détail dans le médaillon noté J, la cartouche est montée avec un jeu longitudinal potentiel (référencé 118), il n'y a pas de partie molle (référencée 112 dans le médaillon A) et la cartouche peut éventuellement se déplacer longitudinalement.

Dans ce premier mode de réalisation d'un filtre à carburant, de même que dans le second mode de réalisation présenté par la suite, l'étanchéité axiale se fait grâce à un ajustement radial de la cartouche autour de différents éléments. En d'autres termes, c'est l'ajustement radial qui interdit les fuites axiales. Ainsi, dans ce premier mode de réalisation , et comme cela apparaît notamment dans les médaillons notés A et G :
- la cartouche est montée avec un ajustement serré radial, à une première de ses extrémités 114, autour de l'extrémité support 115 du noyau central amovible, et, à une seconde de ses extrémités 116, autour de la paroi interne 117 de la cavité centrale 6 de la tête de filtre 4, et
- l'extrémité support 115 du noyau central amovible est montée avec un ajustement serré radial autour du plot 10.

Dans le second mode réalisation (figure 1, partie droite), le noyau central amovible 2_{D} présente un épaulement 19. Le flasque supérieur 13 est limité en déplacement longitudinal par la tête de filtre 4, par sa face supérieure, et le flasque inférieur 12 est limité en déplacement longitudinal par l'épaulement 19 du noyau central amovible 2_{D}, par sa face inférieure.

Comme pour le premier mode de réalisation, la cartouche peut être montée dans la cuve avec ou sans jeu longitudinal potentiel.

Dans l'exemple présenté en détail dans les médaillons notés B et C, la cartouche est montée sans jeu longitudinal potentiel, grâce à une combinaison partie molle / partie dure. La cartouche est donc limitée en déplacement longitudinal à l'intérieur de la cuve 1 par deux forces 110 et 111 de sens opposés s'exerçant sur le flasque supérieur 13 et le flasque inférieur 12.

De même que pour le premier mode de réalisation, ce second mode de réalisation peut être mis en oeuvre avec la cartouche montée avec un jeu longitudinal potentiel. Il n'y a alors pas de partie molle et la cartouche peut éventuellement se déplacer longitudinalement.

Dans les deux modes de réalisation, les flasques 12, 13 sont par exemple réalisés en matière plastique macromoléculaire, telle qu'un polyuréthane notamment. L'élasticité du matériau permet alors de faire jouer un rôle de joint, soit aux bordures périphériques des flasques (cas d'un serrage étanche de type "radial"), soit à la face externe du flasque (cas d'un serrage étanche de type "axial"). Avantageusement, le matériau de filtrage, par exemple un papier ou tissu -éventuellement froncé - est "pris" dans le matériau plastique au moment de la mise en forme des flasques (moulage, ...). On peut aussi prévoir de réaliser les flasques en bi-matière (c'est-à-dire avec deux matériaux différents), à savoir un matériau porteur susceptible de fournir l'étanchéité axiale ou radiale souhaitée (polyuréthane,..), enduit d'une colle pour solidariser le matériau de filtrage (par exemple un polyamide, PVC, résine époxyde, etc...). Tout autre matériau ou combinaison de matériaux pourra être sélectionnée par l'homme du métier, dès lors que les flasques sont susceptibles de jouer leur rôle de supports du matériau de filtrage, en assurant le cas échéant la fonction de joint d'étanchéité axial ou radial.

Une fois le noyau central amovible 2_{G} , 2_{D} placé autour du plot 10 et la cartouche 3 placée autour du noyau central amovible, le fonctionnement du filtre selon l'invention est identique à celui d'un filtre connu de l'état de la technique.

Lors de ce fonctionnement, le liquide à filtrer suit le trajet indiqué par les flèches référencées 16₁ à 16₇.

Tout d'abord, le liquide à filtrer est introduit dans la cavité latérale 5 de la tête de filtre 4 par un orifice d'admission (non représenté), s'écoule le long de la paroi interne de la cuve 1, et passe à travers l'élément filtrant 11. Cet élément filtrant 11 retient les particules en suspension dans le liquide à filtrer.

Le liquide ainsi filtré passe à travers la ou les ouvertures que présente le noyau central amovible 2_{G} , 2_{D}, remonte le long de la cavité centrale 6 de la tête de filtre 4, et sort de la tête de filtre 4 par l'orifice d'évacuation 7.

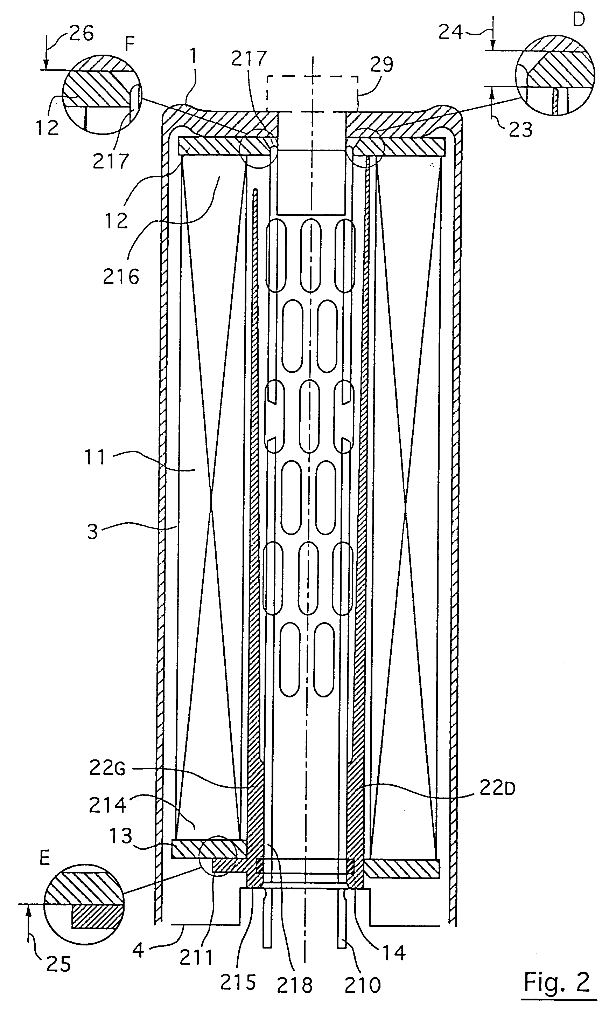

La figure 2 présente :
- sur sa moitié droite, une vue en coupe longitudinale d'un premier mode de réalisation préférentiel d'un filtre à huile selon l'invention, et
- sur sa moitié gauche, une vue en coupe longitudinale d'un second mode de réalisation préférentiel d'un filtre à huile selon l'invention.

La principale différence entre ces deux modes de réalisation d'un filtre à huile et les deux modes de réalisation précédents d'un filtre à carburant (présentés précédemment en relation avec la figure 1) réside dans le fait que le plot de support du noyau central amovible n'est plus formé dans le fond de la cuve mais dans la tête de filtre.

Dans ces deux modes de réalisation d'un filtre à huile (figure 2, partie gauche et partie droite), le noyau central amovible 22_{G} , 22_{D} est ajouré et comprend d'une part une extrémité libre qui débouche dans la cavité centrale de la cartouche (près du fond de la cuve 1), et d'autre part une extrémité support qui est ajustée autour d'un plot formé dans la tête de filtre 4.

Les moyens de fixation de la cuve 1 à la tête de filtre 4 comprennent d'une part une tige 29 traversant le fond de la cuve 1 et d'autre part un plot 210 fixé au fond de la tête de filtre 4. Dans l'exemple présenté sur la figure 2, la tige 29 est une vis et l'extrémité libre du plot 210 comporte un taraudage apte à recevoir cette vis 29.

Le plot 210 autour duquel est ajusté le noyau central amovible 22_{G} , 22_{D} est ici le même que celui utilisé conjointement avec la tige 29 pour fixer la cuve 1 à la tête de filtre 4.

Enfin, un ressort (non représenté) peut être interposé entre le plot et la cuve de façon à faciliter leur désengagement au démontage.

Ici, contrairement au cas de la figure 1, le flasque de cuve 12 est supérieur, et le flasque de tête 13 est inférieur.

Dans un premier mode de réalisation (figure 2, partie droite), le flasque supérieur 12 est limité en déplacement longitudinal entre d'une part le fond de la cuve 1, par sa face supérieure, et d'autre part l'extrémité supérieure du noyau central amovible 22_{D}, par sa face inférieure.

Dans l'exemple présenté en détail dans le médaillon noté D, la cartouche est limitée en déplacement longitudinal à l'intérieur de la cuve 1 par deux forces 23, 24 de sens opposés s'exerçant sur le flasque inférieur 12. Toutefois, il est clair que comme pour les modes de réalisation du filtre à carburant, la cartouche peut être montée dans la cuve avec ou sans jeu longitudinal potentiel.

Dans ce premier mode de réalisation d'un filtre à huile, de même que dans le second mode de réalisation présenté par la suite, l'étanchéité axiale se fait grâce à un ajustement radial de la cartouche autour de différents éléments. Ainsi, dans ce premier mode de réalisation :
- la cartouche est montée avec un ajustement serré radial, à une première de ses extrémités 214, autour de l'extrémité support 215 du noyau central amovible, et, à une seconde de ses extrémités 216, autour de l'extrémité 217 du plot 210 située du côté du fond de la cuve 1,
- et l'extrémité support 215 du noyau central amovible est montée avec un ajustement serré radial autour de l'extrémité 218 du plot 210 située du côté de la tête 4.

Dans le second mode réalisation (figure 2, partie gauche), le noyau central amovible 22_{G} présente un épaulement 211. Le flasque supérieur 12 est limité en déplacement longitudinal par le fond de la cuve 1, par sa face supérieure, et le flasque inférieur 13 est limité en déplacement longitudinal par l'épaulement 211 du noyau central 22_{G}, par sa face inférieure.

Ainsi, comme représenté en détail dans les médaillons notés E et F, la cartouche est limitée en déplacement longitudinal à l'intérieur de la cuve 1 par deux forces 25, 26 de sens opposés s'exerçant sur le flasque inférieur 13 et le flasque supérieur 12. A nouveau, la cartouche peut toutefois être montée dans la cuve avec ou sans jeu longitudinal potentiel.

La figure 3 présente une vue en coupe longitudinale partielle, selon un plan vertical médian, d'une cartouche de filtrage selon l'invention pouvant faire partie d'un filtre tel que présenté en relation avec les figures 1 et 2.

La cartouche 3 possède une forme annulaire cylindrique. La figure 2 présente donc :
- une vue de face du quart de cartouche situé à droite d'un premier plan vertical médian 32, et
- une vue en coupe, selon un second plan vertical médian perpendiculaire au premier, du quart de cartouche situé à gauche du premier plan vertical médian 32.

La cartouche 3 comprend :
- un élément filtrant 11 constitué d'un anneau cylindrique (ou couronne) de papier plissé ;
- des flasques inférieur 12 et supérieur 13 en matière plastique macromoléculaire ;
- une enveloppe extérieure 36 entourant la couronne de papier plissé et présentant une pluralité d'ouvertures 37.

La couronne 11 de papier plissé est par exemple réalisée en ramenant les deux extrémités d'une bande de papier plissé l'une vers l'autre, puis en fixant ces deux extrémités ensemble. Cette fixation peut être réalisée soit à l'aide d'une colle, soit à l'aide d'une agrafe, la colle comme l'agrafe pouvant être incinérables.

La figure 4 présente une vue en coupe, selon un plan vertical médian, de deux modes de réalisation (respectivement sur les parties gauche et droite de cette figure 4) du noyau central amovible apparaissant sur les figures 1 et 2.

Dans les deux modes de réalisation, le noyau central amovible 41_{G}, 41_{D} est un tube évidé et comprend deux portions Z₁, Z₂ de diamètres internes distincts, à savoir :
- une portion inférieure Z₁ qui possède un premier diamètre interne légèrement supérieur au diamètre externe du plot servant de support à ce tube central ; et
- une portion supérieure Z₂ qui possède un second diamètre interne substantiellement supérieur au diamètre externe du plot du support. Pour des raisons de facilité de démoulage, le second diamètre n'est pas constant mais diminue légèrement en fonction de la distance par rapport à la partie supérieure.

La longueur de la portion supérieure Z2 doit être suffisamment importante pour qu'une fois placé dans la cuve, le noyau central s'étende longitudinalement sur une partie au moins substantielle (c'est-à-dire sur une partie suffisamment importante) de la longueur de la cuve.

Le noyau central amovible 41_{G}, 41_{D} comprend également une portée annulaire 42 de joint d'étanchéité.

Le noyau central amovible comporte six ouvertures 43 s'étendant selon l'axe longitudinal 44 du noyau central et à l'intérieur de la portion supérieure Z₂ de ce noyau central. La portion inférieure Z₁ présente également un évidement annulaire supérieur 45 et un évidement annulaire inférieur 46.

L'évidement annulaire inférieur 46 permet de gagner de la matière.

Le premier mode réalisation du noyau central amovible 41_{G} (partie gauche de la figure 4) correspond principalement au cas où l'extrémité supérieure de ce noyau central vient en butée contre un flasque de la cartouche.

Le noyau central amovible présente, dans cet exemple, une portée annulaire 41x de diamètre supérieur à la portée 41y pour faciliter le montage et le démontage de la cartouche. En outre, avantageusement, le serrage du noyau sur le plot est supérieur au serrage de la cartouche sur le noyau pour faciliter le démontage.

Le second mode réalisation du noyau central amovible 41_{D} (partie droite de la figure 4) correspond au cas où le noyau central présente un épaulement 47 servant de support à un flasque de la cartouche.

Ces deux modes de réalisation du noyau central amovible peuvent bien sûr être combinés.

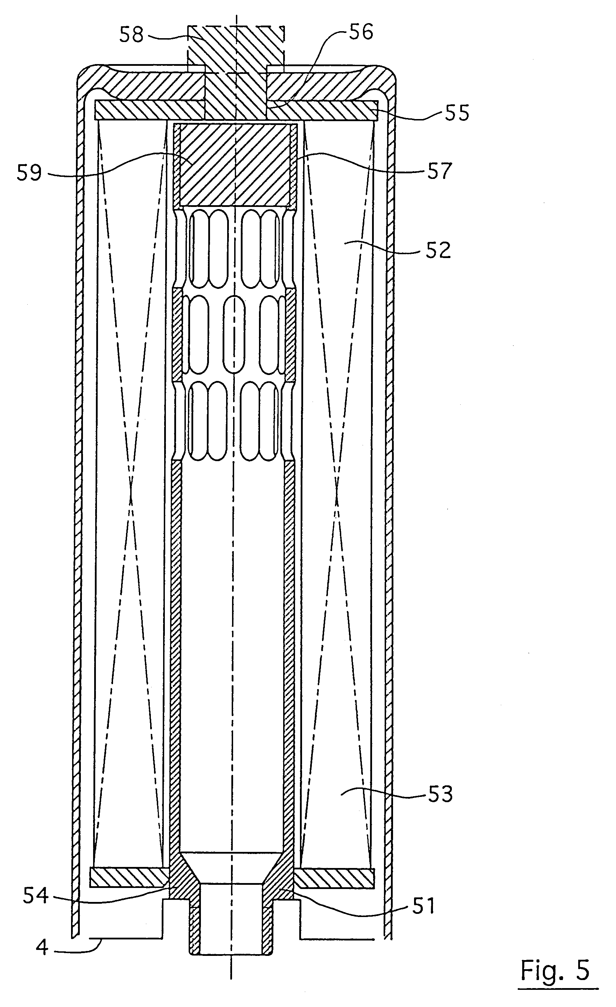

La figure 5 présente une vue en coupe longitudinale d'un autre mode de réalisation préférentiel d'un filtre à huile selon l'invention. Ce mode de réalisation se caractérise par le fait que le plot et le noyau central amovible ne constituent qu'un seul et même élément 51. Dans ce mode de réalisation, l'étanchéité est obtenue d'une part par un serrage radial au niveau de l'extrémité supérieure 52 de la cartouche (le bord périphérique interne 56 du flasque "supérieur" 55 étant écrasé contre la portion en contact de l'élément 58 (formant boulon ou fixation rapide en coopération avec l'élément 59 solidaire de l'élément 51, par exemple)), et d'autre part par un ajustement serré radial à l'extrémité inférieure 53 de la cartouche, autour de l'extrémité 54 du plot 51 située du côté de la tête 4.

Ce mode de réalisation conserve tous les avantages liés aux autres modes de réalisation présentés en relation avec la figure 2, puisque le calage de la cartouche se fait toujours grâce à une paroi (57) du noyau central amovible. De même, il est clair que l'homme du métier saura adapter une telle solution au filtre à carburant présenté en relation avec la figure 1, ainsi qu'à tout autre type de filtre selon l'invention.

## Revendications

1. Filtre pour liquide circulant dans un bloc-moteur, du type constitué d'une cartouche de filtrage insérée dans une cuve, ladite cuve étant destinée à être rapportée sur un organe de réception solidaire dudit bloc-moteur, ladite cartouche (3) étant du type constituée d'un élément filtrant (11) terminé à chacune de ses extrémités par un flasque (12, 13),
ladite cuve (1) coopèrant avec un noyau central indépendant et amovible s'étendant longitudinalement à l'intérieur de ladite cuve sur au moins une partie substantielle de la longueur de la cuve, ladite cartouche (3) étant montée dans ladite cuve (1) autour dudit noyau central amovible, ladite cartouche étant limitée en déplacement longitudinal à l'intérieur de ladite cuve par deux butées,
caractérisé en ce que la cartouche n'a pas de noyau central et en ce qu'une desdites deux butées de limitation du déplacement longitudinal est constituée par une paroi dudit noyau central amovible (2G, 2D ; 22G, 22D ; 41G, 41D ; 51).

2. Filtre selon la revendication 1, caractérisé en ce que ledit noyau central amovible (2_{G}, 2_{D}) comprend d'une part une extrémité support qui est solidaire d'un plot (10) formé dans le fond de la cuve (1), et d'autre part une extrémité libre qui débouche dans la cavité centrale de ladite cartouche (3).

3. Filtre selon la revendication 1, caractérisé en ce que ledit noyau central amovible (22_{G}, 22_{D}) comprend d'une part une extrémité support qui est solidaire d'un plot (210) formé dans l'organe de réception (4) solidaire du bloc-moteur, et d'autre part une extrémité libre qui débouche dans la cavité centrale de ladite cartouche (3).

4. Filtre selon la revendication 2, lesdits flasques étant dits flasque de cuve (12) et de tête (13), caractérisé en ce que, après montage, ledit flasque de tête (13) est limité en déplacement longitudinal entre d'une part l'organe de réception (4) solidaire du bloc-moteur, par une première de ses faces, et d'autre part l'extrémité supérieure du noyau central amovible (2_{G}), par une seconde de ses faces,
et en ce que ledit flasque de cuve (12) est en liberté de déplacement longitudinal à l'intérieur de ladite cuve par rapport audit noyau central amovible.

5. Filtre selon la revendication 2, lesdits flasques étant dits flasque de cuve (12) et de tête (13), caractérisé en ce que ledit noyau central amovible (2_{D}) présente un épaulement essentiellement (19) perpendiculaire à l'axe longitudinal dudit noyau central amovible, en ce que ledit flasque de cuve (12) est limité en déplacement longitudinal par ledit
épaulement (19) du noyau central amovible,
et en ce que ledit flasque de tête (13) est en liberté de déplacement longitudinal à l'intérieur de ladite cuve par rapport audit noyau central amovible, ledit flasque de tête (13) étant limité en déplacement longitudinal, après montage, par l'organe de réception (4) solidaire du bloc-moteur.

6. Filtre selon la revendication 3, lesdits flasques étant dits flasque de cuve (12) et de tête (13), caractérisé en ce que, après montage, ledit flasque de cuve (12) est limité en déplacement longitudinal entre d'une part le fond de la cuve (1), par une première de ses faces, et d'autre part l'extrémité supérieure du noyau central amovible (22_{D}), par une seconde de ses faces,
et en ce que ledit flasque de tête (13) est en liberté de déplacement longitudinal à l'intérieur de ladite cuve par rapport audit noyau central amovible.

7. Filtre selon la revendication 3, lesdits flasques étant dits flasque de cuve (12) et de tête (13), caractérisé en ce que ledit noyau central amovible (22_{G}) présente un épaulement (211) essentiellement perpendiculaire à l'axe longitudinal dudit noyau central amovible,
en ce que ledit flasque de tête (12) est limité en déplacement longitudinal par ledit épaulement (211) du noyau central amovible,
et en ce que ledit flasque de cuve (13) est en liberté de déplacement longitudinal à l'intérieur de ladite cuve par rapport audit noyau central amovible, ledit flasque de cuve (12) étant limité en déplacement longitudinal, après montage, par le fond de la cuve (1).

8. Filtre selon l'une quelconque des revendications 1 à 7, caractérisé en ce que ladite cartouche est montée avec un ajustement serré radial aux environs d'au moins une de ses extrémités (114, 116).

9. Filtre selon l'une quelconque des revendications 1 à 8, caractérisé en ce que ladite cartouche est montée avec un ajustement serré axial aux environs d'au moins une de ses extrémités (114, 116).

10. Filtre selon l'une quelconque des revendications 4 à 9, caractérisé en ce que ladite cartouche est montée dans ladite cuve avec un jeu longitudinal potentiel.

11. Filtre selon l'une quelconque des revendications 4 à 9, caractérisé en ce que ladite cartouche est montée dans ladite cuve sans jeu longitudinal potentiel.

12. Filtre selon l'une quelconque des revendications 1 à 11, caractérisé en ce que ledit plot constitue également ledit noyau central amovible (51).

13. Filtre selon l'une quelconque des revendications 2 à 11, caractérisé en ce qu'il comprend un joint annulaire d'étanchéité (14) placé entre la base interne dudit noyau central amovible (2_{G,} 2_{D} ; 22_{G}, 22_{D} ; 41_{G}, 41_{D}) et ledit plot (10 ; 210).

14. Filtre selon l'une quelconque des revendications 2 à 13, caractérisé en ce que ledit noyau central amovible (2_{G}, 2_{D} ; 22_{G}, 22_{D} ; 41_{G}, 41_{D} ) est un tube présentant deux portions adjacentes possédant des diamètres internes distincts, à savoir :
- une portion inférieure (Z₁) possédant d'une part un premier diamètre interne supérieur au diamètre externe dudit plot et d'autre part un premier diamètre externe ; et
- une portion supérieure (Z₂) possédant d'une part un second diamètre interne supérieur au diamètre externe dudit plot et d'autre part un second diamètre externe inférieur audit premier diamètre externe.

15. Filtre selon la revendication 14, caractérisé en ce que ledit noyau central amovible comporte au moins une ouverture (43) au niveau de ladite portion supérieure (Z₂) du noyau central amovible.

16. Filtre selon l'une quelconque des revendications 4 à 15, caractérisé en ce que lesdits flasques (12, 13) sont en matière macromoléculaire.

17. Filtre selon l'une quelconque des revendications 1 à 16, caractérisé en ce que ladite cuve (1) possède une face unique de transfert de liquide entre la cartouche (3) et l'organe de réception solidaire du bloc-moteur.

## Claims

1. Filter for liquid circulating in an engine block, of the type consisting of a filter cartridge inserted in a bowl, the said bowl being designed so as to be connected to a receiving device secured to the said engine block, the said cartridge (3) being of the type consisting of a filter element (11) terminated at each of its ends by a flange (12, 13),
the said bowl (1) cooperating with an independent and detachable central core extending longitudinally inside the said bowl, over at least a substantial part of the length of the bowl, the said cartridge (3) being mounted in the said bowl (1) around the said detachable central core, the longitudinal movement of the said cartridge being limited inside the said bowl by two stops,
characterized in that the cartridge does not have a central core and in that one of the two said stops for limiting the longitudinal movement consists of a wall of the said detachable central core (2G, 2D; 22G, 22D; 41G, 41D; 51).

2. Filter according to claim 1, characterized in that the said detachable central core (2G, 2D) comprises on the one hand a supporting end which is secured to a block (10) formed in the bottom of the bowl (1), and on the other hand a free end which emerges into the central cavity of the said cartridge (3).

3. Filter according to claim 1, characterized in that called detachable central core (22G, 22D) comprises on the one hand a supporting end which is secured to a block (210) formed in the receiving device (4) secured to the engine block, and on the other hand a free end which emerges into the central cavity of the said cartridge (3).

4. Filter according to claim 2, the said flanges being called bowl flange (12) and head flange (13), characterized in that, after mounting, the longitudinal movement of the said head flange (13) is limited between on the one hand the receiving device (4) secured to the engine block by the first of its faces, and on the other hand the upper end of the detachable central core (2G) by the second of its faces, and in that the said bowl flange (12) is free to move longitudinally inside the said bowl with respect to the
said detachable central core.

5. Filter according to claim 2, the said flanges being called bowl flange (12) and head flange (13), characterized in that the said detachable central core (2D) has a shoulder (19) essentially perpendicular to the longitudinal axis of the said detachable central core, in that the longitudinal movement of the said bowl flange (12) is limited by the said shoulder (19) of the detachable central core,
and in that the said head flange (13) is free to move longitudinally inside the said bowl with respect to the said detachable central core, the longitudinal movement of the said head flange (13) being limited, after mounting, by the receiving device (4) secured to the engine block.

6. Filter according to claim 3, the said flanges being called bowl flange (12) and head flange (13), characterized in that, after mounting, the longitudinal movement of the said head flange (13) is limited between on the one hand the bottom of the bowl (1), by the first of its faces, and on the other hand the upper end of the detachable central core (22D), by the second of its faces,
and in that the said head flange (13) is free to move longitudinally inside the said bowl with respect to the said detachable central core.

7. Filter according to claim 3, the said flanges being called bowl flange (12) and head flange (13), characterized in that the said detachable central core (22G) has a shoulder (211) which is essentially perpendicular to the longitudinal axis of the said detachable central core,
in that the longitudinal movement of the said head flange (12) is limited by the said shoulder (211) of the detachable central core,
and in that the said bowl flange (13) is free to move longitudinally inside the said bowl with respect to the said detachable central core, the longitudinal movement of the said bowl flange (12) being limited, after mounting, by the bottom of the bowl (1).

8. Filter according to any one of claims 1 to 7, characterized in that the said cartridge is mounted with a tight radial fit to the surrounds of at least one of its ends (114, 116).

9. Filter according to any one of claims 1 to 7, characterized in that the said cartridge is mounted with a tight axial fit to the surrounds of at least one of its ends (114, 116).

10. Filter according to any one of claims 4 to 9, characterized in that the said cartridge is mounted in the said bowl with a potential longitudinal play.

11. Filter according to any one of claims 4 to 9, characterized in that the said cartridge is mounted in the said bowl without a potential longitudinal play.

12. Filter according to any one of claims 1 to 11, characterized in that the said block also constitutes the said detachable central core (51).

13. Filter according to any one of claims 2 to 11, characterized in that it includes an annular sealing gasket (14) placed between the inner base of the said detachable central core (2G, 2D; 22G, 22D; 41G, 41D) and the said block (10, 210).

14. Filter according to any one of claims 2 to 13, characterized in that the said detachable central core (2G, 2D; 22G, 22D; 41G, 41D) is a tube having two adjacent portions possessing distinct internal diameters, namely:
- a lower portion (Z1) possessing on the one hand a first internal diameter greater than the external diameter of the said block, and on the other hand a first external diameter; and
- an upper portion (Z2) possessing on the one hand a second internal diameter greater than the external diameter of the said block, and on the other hand a second external diameter smaller than the first external diameter.

15. Filter according to claim 14, characterized in that the said detachable central core includes at least one opening (43) in the region of the said upper portion (Z2) of the detachable central core.

16. Filter according to any one of claims 4 to 15, characterized in that the said flanges (12, 13) are made of a macromolecular material.

17. Filter according to any one of claims 1 to 16, characterized in that the said bowl (1) possesses a single face for transferring liquid between the cartridge (3) and the receiving device secured to the engine block.

## Patentansprüche

1. Filter für in einem Motorblock zirkulierende Flüssigkeiten, von der Art, die aus einer Filterpatrone besteht, die in einem Behälter eingebaut ist, der auf ein Aufnahmeteil aufgesetzt wird, welches selbst fest mit dem Motorblock verbunden ist, wobei die Patrone (3) von der Art ist, die aus einem Filterelement (11) besteht, das an beiden Enden einen Flansch (12, 13) trägt,
wobei der Behälter (1) mit einem unabhängigen und herausnehmbaren Mittelkern zusammenwirkt, der sich innerhalb des Behälters über zumindest einen wesentlichen Teil der Länge des Behälters erstreckt, wobei die Patrone (3) in dem Behälter (1) um den herausnehmbaren Mittelkern angebracht ist und wobei die Bewegung der Patrone in Längsrichtung durch zwei Anschläge begrenzt wird,
dadurch gekennzeichnet, daß die Patrone keinen mittleren Kern besitzt und, daß einer der zwei Anschläge zum Begrenzen der Längsbewegung durch eine Wand des herausnehmbaren Mittelkerns gebildet wird (2G, 2D; 22G, 22D; 41G, 41D; 51).

2. Filter gemäß Anspruch 1,
dadurch gekennzeichnet, daß der herausnehmbare Mittelkern (2_{G}, 2_{D}) einerseits ein stützendes Ende, das fest mit einem am Boden des Behälters (1) ausgebildeten Aufsteckteiles (10) verbunden ist und andererseits ein freies Ende hat, das im mittleren Hohlraum der Patrone (3) mündet.

3. Filter gemäß Anspruch 1,
dadurch gekennzeichnet, daß der herausnehmbare Mittelkern (22_{G}, 22_{D}) einerseits ein stützendes Ende enthält, das fest mit einem Aufsteckteil (210) verbunden ist, welches in dem mit dem Motorblock verbundenen Aufnahmeteil (4) ausgebildet ist, und andererseits ein freies Ende enthält, das im mittleren Hohlraum der Patrone (3) mündet.

4. Filter gemäß Anspruch 2,
wobei die Flansche als Behälterflansch (12) und Kopfflansch (13) bezeichnet werden,
dadurch gekennzeichnet, daß nach dem Einbau, das mit dem Motorblock fest verbundene Aufnahmeteil (4) den Kopfflansch (13) in seiner Bewegung in Längsrichtung über seine erste Fläche begrenzt, während andererseits das obere Ende des herausnehmbaren Kerns (2_{G}) den Kopfflansch über seine zweite Fläche in gleicher Weise begrenzt und
daß der Behälterflansch (12) sich im Inneren des Behälters im Verhältnis zum herausnehmbaren Mittelkern frei in Längsrichtung bewegen kann.

5. Filter gemäß Anspruch 2, wobei die Flansche als Behälterflansch (12) und Kopfflansch (13) bezeichnet werden,
dadurch gekennzeichnet, daß der herausnehmbare Mittelkern (2_{D}) eine Schulter (19) aufweist, die im wesentlichen senkrecht zur Längsachse des herausnehmbaren Mittelkerns steht,
dadurch, daß der Behälterflansch (12) in seiner Längsbewegung von dieser Schulter (19) des herausnehmbaren Mittelkerns begrenzt ist und
dadurch, daß die Bewegung in Längsrichtung des Kopfflansches (13) innerhalb des Behälters gegenüber dem herausnehmbaren Mittelkern frei ist, wobei nach dem Einbau, die Bewegung des Kopfflansches (13) in Längsrichtung von dem mit dem Motorblock fest verbundenen Aufnahmeteil (4) begrenzt wird.

6. Filter gemäß Anspruch 3,
wobei die Flansche als Behälterflansch (12) und Kopfflansch (13) bezeichnet werden,
dadurch gekennzeichnet, daß nach dem Einbau, der Behälterflansch (12) in seiner Bewegung in Längsrichtung einerseits zwischen dem Boden des Behälters (1) über eine erste Fläche begrenzt wird, und andererseits vom oberen Ende des herausnehmbaren Mittelkernes (22_{D}) über eine zweite Fläche begrenzt wird und,
daß der Kopfflansch (13) innerhalb des Behälters Bewegungsfreiheit in Längsrichtung gegenüber dem herausnehmbaren Mittelkern genießt.

7. Filter gemäß Anspruch 3,
wobei die Flansche als Behälterflansch (12) und Kopfflansch (13) bezeichnet werden,
dadurch gekennzeichnet, daß der herausnehmbare Mittelkern (22_{G}) einen Ansatzrand (211) aufweist, der im wesentlichen senkrecht zur Längsachse des herausnehmbaren Mittelkerns steht,
daß der Kopfflansch (13) von diesem Ansatzrand (211) des herausnehmbaren Mittelkernes in seiner Bewegung in Längsrichtung begrenzt ist und,
daß der Behälterflansch (12) innerhalb des Behälters Bewegungsfreiheit in Längsrichtung gegenüber dem herausnehmbaren Mittelkern genießt, wobei der Behälterflansch (12) nach dem Einbau in seiner Bewegung in Längsrichtung vom Boden des Behälters (1) begrenzt wird.

8. Filter gemäß einem der Ansprüche 1 bis 7,
dadurch gekennzeichnet, daß die Patrone so eingebaut wird, daß sie in der Nähe von mindestens einem ihrer Enden (114, 116) in radialer Richtung festgezogen wird.

9. Filter gemäß einem der Ansprüche 1 bis 8,
dadurch gekennzeichnet, daß die Patrone so eingebaut wird, daß sie in der Nähe von mindestens einem ihrer Enden (114, 116) in axialer Richtung festgezogen wird.

10. Filter gemäß einem der Ansprüche 4 bis 9,
dadurch gekennzeichnet, daß die Patrone im Behälter mit einem möglichen Spielraum in Längsrichtung eingesetzt wird.

11. Filter gemäß einem der Ansprüche 4 bis 9,
dadurch gekennzeichnet, daß die Patrone im Behälter ohne möglichen Spielraum in Längsrichtung eingesetzt wird.

12. Filter gemäß einem der Ansprüche 1 bis 11,
dadurch gekennzeichnet, daß das Aufsteckteil ebenfalls der herausnehmbare Mittelkern (51) ist.

13. Filter gemäß einem der Ansprüche 2 bis 11,
dadurch gekennzeichnet, daß es über eine Ringdichtung (14) verfügt, die zwischen dem inneren Unterteil des herausnehmbaren Mittelkernes (2_{G}, 2_{D}; 22_{G}, 22_{D}; 41_{G}, 41_{D}) und dem Aufsteckteil (10; 210) angebracht ist.

14. Filter gemäß einem der Ansprüche 2 bis 13,
dadurch gekennzeichnet, daß der herausnehmbare Mittelkern (2_{G}, 2_{D}; 22_{G}, 22_{D}; 41_{G}, 41_{D}) ein Rohr ist, welches zwei nebeneinanderliegende Teile mit verschiedenen inneren Durchmessern aufweist, nämlich:
- ein unteres Teil (Z₁), mit einerseits einem ersten Innendurchmesser, der größer ist als der Außendurchmesser des Aufsteckteils und andererseits einem ersten Außendurchmesser, und
- einen oberen Teil (Z₂), mit einerseits einem zweiten Innendurchmesser, der größer ist als der Außendurchmesser des Aufsteckteils und andererseits einem zweiten Außendurchmesser, der kleiner ist, als der erste Außendurchmesser.

15. Filter gemäß Anspruch 14,
dadurch gekennzeichnet, daß der herausnehmbare Mittelkern mindestens eine Öffnung (43) auf der Höhe des oberen Teils (Z₂) des herausnehmbaren Mittelkernes aufweist.

16. Filter gemäß einem der Ansprüche 4 bis 15,
dadurch gekennzeichnet, daß die Flansche (12, 13) aus makromolekularem Material sind.

17. Filter gemäß einem der Ansprüche 1 bis 16,
dadurch gekennzeichnet, daß der Behälter (1) eine einzige Fläche für die Flüssigkeitsübertragung zwischen der Patrone (3) und dem fest mit dem Motorblock verbundenen Aufnahmeteil hat.
